# EUROPÄISCHE PATENTSCHRIFT

(11) **EP 0 828 803 B1**
(45) Veröffentlichungstag und Bekanntmachung des Hinweises auf die Patenterteilung: **07.07.1999**
(21) Anmeldenummer: 96914840.2
(22) Anmeldetag: 26.04.1996
(51) Int. Cl.: C09K 17/04, C05D 9/00, C09K 17/52

(54) **MINERALISCHES VEGETATIONSSUBSTRAT, VERFAHREN ZUR (RE)KULTIVIERUNG VON BÖDEN UND VERWENDUNG**
MINERAL VEGETATION SUBSTRATE, PROCESS FOR THE (RE)CULTIVATION OF SOILS, AND USE
SUBSTRAT MINERAL DE VEGETATION, PROCEDE POUR LA CULTURE OU LA RESTAURATION DES SOLS ET APPLICATION

(30) Priorität: 30.05.1995 DE 19520823
(43) Veröffentlichungstag der Anmeldung: 18.03.1998
(73) Patentinhaber: Van Stephoudt, Franz, 47652 Weeze (DE)
(72) Erfinder: Van Stephoudt, Franz, 47652 Weeze (DE)
(74) Vertreter: Walter, Wolf-Jürgen
(86) Internationale Anmeldenummer: DE9600775
(87) Internationale Veröffentlichungsnummer: WO9638512

(56) Entgegenhaltungen:
- EP-A- 0 183 639
- EP-A- 0 279 056
- EP-A- 0 427 704
- DE-A- 4 240 051
- DE-A- 4 323 633

## Beschreibung

Die Erfindung betrifft ein mineralisches Vegetationssubstrat zur land- oder forstwirtschaftlichen Nutzung sowie ein Verfahren zur Kultivierung oder Rekultivierung von Böden und die Verwendung des Substrates.

Es sind eine Reihe von Bodensubstraten aus Abfall- oder Recyclingstoffen bekannt. So offenbart die DE 43 23 633 eine Mischung zur Abdeckung von Halden, Bodensenkungen usw. als Rekultivierungssubstrat aus organischen und mineralischen Komponenten zu etwa gleichen Anteilen beider Komponenten.

In der DE 34 39 224 wird eine Vegetationsschicht aus einem mineralischen Gemenge beschrieben, das aus Sanden, Humus, Gesteinen u. dgl. besteht und dem ein Zuschlag wie Haldenschlacke hinzugegeben wird, wobei unter Feuchtigkeitseinwirkung Salze, insbesondere Kalk abgegeben werden soll.

Die DE 42 40 051 setzt Tondachziegelbruch unterschiedlicher Körnungen zusammen mit Kompost insbesondere für die Begrünung von Dachflächen ein.

Schließlich wird in der DE 43 11 567 ein Substrat zur Begrünung von Dächern vorgeschlagen, das aus offenporigen, gebrochenen anorganischen Recycling- und/oder Abfallstoffen als Gerüstbaustoffe und kompostierten organischen Recycling- und/oder Abfallstoffen als Humusstoffe besteht.

Der Erfindung liegt die Aufgabe zugrunde, ein mineralisches Vegetationssubstrat bereitzustellen, das hinsichtlich seiner Zusammensetzung eine sichere land- oder forstwirtschaftliche Aufzucht von Kulturpflanzen oder Bäumen gewährleistet, insbesondere auf humusarmen Böden, und dabei eine ausreichende nutzbare Feldkapazität hat.

Erfindungsgemäß besteht das mineralische Vegetationssubstrat aus
45 bis 65 Gew-% geogener Sand und/oder sandiger Mutterboden mit einer Körnung d₅₀ von 0,20 - 0,35 mm,
4 bis 8 Gew-% grobkörniger Tonziegelbruch mit einer Körnung d₅₀ von 25 - 35 mm,
8 bis 18 Gew-% feinkörniger Tonziegelbruch mit einer Körnung d₅₀ von 0,7 - 1,5 mm,
4 bis 8 Gew-% grobkörniger Betonbruch mit einer Körnung d₅₀ von 15 bis 25 mm,
8 bis 18 Gew-% feinkörniger Betonbruch mit einer Körnung d₅₀ von 1,5 - 3,5 mm,
8 bis 13 Gew-% Bindestoffe wie geogener Lehm mit einer Körnung d₅₀ von 0,08 - 0,15 mm oder Ton
in einem homogenen Gemenge.

Die erfindungsgemäße Substratzusammensetzung, die ohne den Zusatz von Humus- oder Kompostprodukten auskommen kann, zeigt eine gute nutzbare Feldkapazität bzw. Speicherfeuchte. Die Feldkapazität ist definiert als maximale Wassermenge, die ein Boden in ungestörter Lagerung gegen die Schwerkraft zurückhalten kann. Sie wird im allgemeinen angegeben als der Wassergehalt 2 bis 3 Tage nach voller Wassersättigung oder der Wassergehalt bei einer definierten Wasserspannung von pF > 1,8 und wird in 1/m³ oder mm/dm angegeben. Bei der für die praktische Nutzung verwendeten Größe "nutzbare Feldkapazität" ist das sog. tote Wasser abgezogen, wodurch der Wassergehalt bei einer Wasserspannung zwischen pF 1,8 und 4,2 angegeben wird.

Bei lockerer Lagerung des erfindungsgemäßen Vegetationssubstrates werden Werte von über 16 mm/dm bei der nutzbaren Feldkapazität erreicht, d.h. mittlere effektive Durchwurzelungstiefen von über 84 mm.

Erfindungsgemäß besonders vorteilhaft sind mineralische Vegetationssubstrate, bestehend aus
50 bis 65 Gew-% geogener Sand und/oder sandiger Mutterboden mit einer Körnung d₅₀ von 0,25 - 0,30 mm,
5 bis 7 Gew-% grobkörniger Tonziegelbruch mit einer Körnung d₅₀ von 25 - 30 mm,
10 bis 18 Gew-% feinkörniger Tonziegelbruch mit einer Körnung d₅₀ von 0,9 - 1,1 mm,
4 bis 6 Gew-% grobkörniger Betonbruch mit einer Körnung d₅₀ von 15 bis 25 mm,
8 bis 16 Gew-% feinkörniger Betonbruch mit einer Körnung d₅₀ von 1,5 - 3,0 mm,
8 bis 13 Gew-% Bindestoffe wie geogener Lehm mit einer Körnung d₅₀ von 0,08 - 0,15 mm oder Ton
in einem homogenen Gemenge.

Die angebenen Körnung d₅₀ bedeutet, daß wenigstens 50 % des speziellen Bestandteiles in der bezeichneten Korngröße vorliegen, und der Rest statistisch oberhalb und unterhalb dieser Korngröße verteilt ist.

Dem erfindungsgemäßen Vegetationssubstrat können Nähr- und Bodenverbesserungsstoffe zugesetzt werden; es ist jedoch in der oben angegebenen Zusammensetzung bereits landwirtschaftlich oder insbesondere forstwirtschaftlich nutzbar. Besonders geeignet ist es für einen Einsatz auf nährstoffarmen, grundwasserfernen Sandstandorten, insbesondere nach Waldbränden, für eine Rekultivierung mit auch anspruchsvollen Holzarten. Weiterhin ist es für waldbaulichen Einsatz zur Aufzucht von Laubhölzern auf armen oder stark exponierten Standorten effektiv einsetzbar. Es eignet sich ebenfalls mit besonderem Vorteil für die Begrünung bzw. Bewaldung von Verkippungsfächen in Braunkohlentagebauen bzw. Meliorierung tertiärer Sanderflächen und Bepflanzung kontaminierter Böden.

Die Erfindung betrifft auch ein Verfahren zur Kultivierung oder Rekultivierung humusarmer oder verunreinigter Böden, das dadurch gekennzeichnet ist, daß ein mineralisches Vegetationssubstrat, bestehend aus
45 bis 65 Gew-% geogener Sand und/oder sandiger Mutterboden mit einer Körnung d₅₀ von 0,20 - 0,35 mm,
4 bis 8 Gew-% grobkörniger Tonziegelbruch mit einer Körnung d₅₀ von 25 - 35 mm,
8 bis 18 Gew-% feinkörniger Tonziegelbruch mit einer Körnung d₅₀ von 0,7 - 1,5 mm,
4 bis 8 Gew-% grobkörniger Betonbruch mit einer Körnung d₅₀ von 15 bis 25 mm,
8 bis 18 Gew-% feinkörniger Betonbruch mit einer Körnung d₅₀ von 1,5 - 3,5 mm,
8 bis 13 Gew-% Bindestoffe wie geogener Lehm mit einer Körnung d₅₀ von 0,08 - 0,15 mm oder Ton
in einem homogenen Gemenge mit einer Schichtdicke von 20 bis 100 cm auf den vorhandenen Boden aufgetragen wird und auf diesem Substrat die Bepflanzung erfolgt.

Die Schichtdicke und die genaue Zusammensetzung des zur Kultivierung oder Rekultivierung von Böden einzusetzenden Mineralstoffgemisches hängt von der mittleren Niederschlagsmenge, von der Art der zu verwendenden Pflanzen, ausgewählt aus der Gruppe Gras, Bäume und Sträucher, und hängt von der Art des vorhandenen Bodens ab. Je nach Art dieser vorhandenen Faktoren kann der Fachmann ohne erfinderisches Zutun die für seinen Zweck passende Schichtdicke und Substratzusammensetzung wählen, um zu dem gewünschten Ergebnis zu gelangen. So ist z.B. bei einem sehr sandigen Boden mit niedrigen Bodenwertzahlen und schnellem Niederschlagswasserablauf eine Schicht im Bereich von 50 bis 70 cm mineralisches Vegetationssubstrat mit höheren Anteilen an Bindestoffen (das Gemenge bindende Stoffe und damit wasserhaltend) und feinkörnigem Tonziegelbruch vorzusehen, um dadurch Niederschlagswasser besser zu speichern und eine gute Durchwurzelung mit z.B. Laubbäumen zu gewährleisten. Dabei wird u.a. auch die Kapillar-Speicherwirkung von Wasser des feinkörnigen Tonziegelbruches ausgenutzt.

Höhere Schichtdicken von 70 bis 100 cm und ebenfalls höhere Anteile Bindestoffe und feinkörniger Tonziegelbruch sind bei kontaminierten Böden vorzusehen, um möglichst kein Niederschlagswasser in die kontaminierten Böden gelangen zu lassen und dadurch das Grundwasser von Verunreinigungen freizuhalten. Eine Aufforstung mit Nadelwald oder Mischwald ist in einem solchen Falle zweckmäßig.

Bei lehmigen Böden ist dagegen ein geringerer Anteil an Bindestoffen und feinkörnigem Ziegel- und/oder Betonbruch des mineralischen Vegetationssubstrates zweckmäßig, um einen besseren Wasserablauf durch das Substrat hindurch zu gewährleisten, wobei die Schichtdicke auch von der gewünschten Bepflanzung abhängt (z.B. Gras etwa 25 bis 30 cm). Auch bei hohen mittleren Niederschlagsmengen ist ein ähnlicher Schichtaufbau zum besseren Wasserablauf zweckmäßig.

Diese Hinweise sind ein ausreichender Anhaltspunkt für den Fachmann, das von ihm angestrebte Ziel durch Variation der genannten Merkmale zu erreichen.

Überraschenderweise hat sich gezeigt, daß ein erfindungsgemäß zusammengesetztes Vegetationssubstrat besonders im angegebenen Verwendungsbereich eine gute Durchwurzelung bei ausreichendem Haltungsvermögen für Oberflächenwasser ermöglicht.

Bei einer Lagerungsdicke von 800 mm des Substrates bei lockerer Lagerung ist in Freilandversuchen ein Auflaufen von Buchensämlingen ohne zusätzliche Bewässerung innerhalb einer Vegetationsperiode von über 95 % erzielt worden bei durchschnittlichen Niederschlagsmengen.

Die Erfindung soll nachstehend durch Beispiele näher erläutert werden.

### Beispiel 1

Die Einzelbestandteile des Vegetationssubstrates wurden entsprechend ihrer Körnung nach Anlieferung gebrochen und gesiebt. Die einzelnen Bestandteile wurden in den vorherbestimmten Mengenanteilen in einer Mischanlage vermischt. Die Mischung bestand aus einem im wesentlichen homogenen Gemenge von 25 Gew-% geogenem Sand und 25 Gew-% Mutterboden mit einer Körnung d₅₀ von 0,28 mm,
5,5 Gew-% grobkörnigem Tonziegelbruch mit einer Körnung d₅₀ von 30 mm,
14 Gew-% feinkörnigem Tonziegelbruch mit einer Körnung d₅₀ von 1,1 mm,
4,5 Gew-% grobkörnigem Betonbruch mit einer Körnung d₅₀ von 20 mm,
16 Gew-% feinkörnigem Betonbruch mit einer Körnung d₅₀ von 2,5 mm,
10 Gew-% geogenem Lehm mit einer Körnung d₅₀ von etwa 0,12 mm.

Das Gemenge wurde als Vegetationssubstrat mit einer Schichtdicke von 80 cm auf einen grundwasserfernen Standort (armer Sandstandort, entspricht etwa der Bodenwertzahl 15 in der Landwirtschaft) aufgebracht. Die Fläche wurde mit Linden, Rotbuchen und Roteichen Heistern im Verband 2 x 2 m angepflanzt.

Nach dem Ablauf von zwei Vegetationsperioden waren 96 % der Setzlinge angegangen, wobei der Boden keine weiteren Nährstoffe und keine zusätzliche Bewässerung nach dem Pflanzen im Anschluß an eine längere Regenperiode erhalten hatte.

Eine im Vergleich unmittelbar daneben angelegte gleich große Fläche auf dem dort vorhandenen natürlichen Bodensubstrat ergab über den gleichen Zeitraum folgendes Bild:
Ausfall bei Linden und Rotbuchen ca. 60 %
Ausfall bei Roteichen ca. 40 %.

### Beispiel 2

Ein Gemenge gemäß Beispiel 1 wurde auf eine Waldbrandfläche von etwa 10.000 m² mit einer Schichtdicke von 40 cm aufgebracht. Es wurden 2-jährige S-Kiefern mit Abständen von 130 x 30 cm gepflanzt. Nach Ablauf von zwei Vegetationsperioden waren 92 % der Setzlinge angegangen und hatten frische Triebe ausgebildet.

## Patentansprüche

1. Mineralisches Vegetationssubstrat mit Sand, Beton- und Ziegelbruch, gekennzeichnet durch folgende Bestandteile
45 bis 65 Gew-% geogener Sand und/oder sandiger Mutterboden mit einer Körnung d₅₀ von 0,20 - 0,35 mm,
4 bis 8 Gew-% grobkörniger Tonziegelbruch mit einer Körnung d₅₀ von 25 - 35 mm,
8 bis 18 Gew-% feinkörniger Tonziegelbruch mit einer Körnung d₅₀ von 0,7 - 1,5 mm,
4 bis 8 Gew-% grobkörniger Betonbruch mit einer Körnung d₅₀ von 15 bis 25 mm,
8 bis 18 Gew-% feinkörniger Betonbruch mit einer Körnung d₅₀ von 1,5 - 3,5 mm,
8 bis 13 Gew-% Bindestoffe wie geogener Lehm mit einer Körnung d₅₀ von 0,08 - 0,15 mm oder Ton
in einem homogenen Gemenge.

2. Substrat nach Anspruch 1, gekennzeichnet durch folgende Bestandteile
50 bis 65 Gew-% geogener Sand und/oder sandiger Mutterboden mit einer Körnung d₅₀ von 0,25 - 0,30 mm,
5 bis 7 Gew-% grobkörniger Tonziegelbruch mit einer Körnung d₅₀ von 25 - 30 mm,
10 bis 18 Gew-% feinkörniger Tonziegelbruch mit einer Körnung d₅₀ von 0,9 - 1,1 mm,
4 bis 6 Gew-% grobkörniger Betonbruch mit einer Körnung d₅₀ von 15 bis 25 mm,
8 bis 16 Gew-% feinkörniger Betonbruch mit einer Körnung d₅₀ von 1,5 - 3,0 mm,
8 bis 13 Gew-% geogener Lehm mit einer Körnung d₅₀ von 0,08 - 0,15 mm
in einem homogenen Gemenge.

3. Substrat nach Anspruch 1 oder 2, dadurch gekennzeichnet, daß es als eine nutzbare Feldkapazität von >16 mm/dm hat bei einer Wasserspannung pF zwischen 1,8 und 4,2.

4. Verfahren zur Kultivierung oder Rekultivierung humusarmer oder verunreinigter Böden, dadurch gekennzeichnet, daß ein mineralisches Vegetationssubstrat, bestehend aus
45 bis 65 Gew-% geogener Sand und/oder sandiger Mutterboden mit einer Körnung d₅₀ von 0,20 - 0,35 mm,
4 bis 8 Gew-% grobkörniger Tonziegelbruch mit einer Körnung d₅₀ von 25 - 35 mm,
8 bis 18 Gew-% feinkörniger Tonziegelbruch mit einer Körnung d₅₀ von 0,7 - 1,5 mm,
4 bis 8 Gew-% grobkörniger Betonbruch mit einer Körnung d₅₀ von 15 bis 25 mm,
8 bis 18 Gew-% feinkörniger Betonbruch mit einer Körnung d₅₀ von 1,5 - 3,5 mm,
8 bis 13 Gew-% Bindestoffe wie geogener Lehm mit einer Körnung d₅₀ von 0,08 - 0,15 mm oder Ton
in einem homogenen Gemenge mit einer Schichtdicke von 20 bis 100 cm auf den vorhandenen Boden aufgetragen wird und auf diesem Substrat die Bepflanzung erfolgt.

5. Verfahren nach Anspruch 4, dadurch gekennzeichnet, daß die Schichtdicke und die Zusammensetzung des Substrates in Abhängigkeit von der mittleren Niederschlagsmenge, von der Art der zu verwendenden Pflanzen ausgewählt aus der Gruppe Gras, Bäume und Sträucher und in Abhängigkeit von der Art des vorhandenen Bodens ausgewählt wird.

6. Verwendung des mineralischen Vegetationssubstrates nach Anspruch 1 zur Bepflanzung humusarmer oder verunreinigter Böden.

7. Verwendung nach Anspruch 6 zur Rekultivierung von Waldbrandflächen, Tagebauflächen und/oder Tagebau-Verkippungsflächen.

8. Verwendung nach Anspruch 6 oder 7, dadurch gekennzeichnet, daß es als Schicht mit einer Schichtdicke von 20 bis 100 cm auf dem vorhandenen Boden aufgebracht wird.

9. Verwendung nach Anspruch 8, dadurch gekennzeichnet, daß es als Schicht mit einer Schichtdicke von 40 bis 80 cm auf dem vorhandenen Boden aufgebracht wird.

## Claims

1. A mineral vegetation substrate, characterized by the following components:
45 to 65 wt% geogenous sand and/or sandy topsoil with a grain size d₅₀ of 0.20-0.35 mm,
4 to 8 wt% coarse-grained crushed clay tile with a grain size d₅₀ of 25-35 mm,
8 to 18 wt% fine-grained crushed clay tile with a grain size d₅₀ of 0.7-1.5 mm,
4 to 8 wt% coarse-grained crushed concrete with a grain size d₅₀ of 15 to 25 mm,
8 to 18 wt% fine-grained crushed concrete with a grain size d₅₀ of 1.5-3.5 mm,
8 to 13 wt% binders such as geogenous loam with a grain size d₅₀ of 0.08-0.15 mm or clay
in a homogeneous mixture.

2. A substrate according to Claim 1, characterized by the following components:
50 to 65 wt% geogenous sand and/or sandy topsoil with a grain size d₅₀ of 0.25-0.30 mm,
5 to 7 wt% coarse-grained crushed clay tile with a grain size d₅₀ of 25-30 mm,
10 to 18 wt% fine-grained crushed clay tile with a grain size d₅₀ of 0.9-1.1 mm,
4 to 6 wt% coarse-grained crushed concrete with a grain size d₅₀ of 15 to 25 mm,
8 to 16 wt% fine-grained crushed concrete with a grain size d₅₀ of 1.5-3.0 mm,
10 to 13 wt% geogenous loam with a grain size d₅₀ of 0.08-0.15 mm in a homogeneous mixture.

3. A substrate according to Claim 1 or 2, characterized in that it has an average field capacity of >16 mm/dm at a water tension pF between 1.8 and 4.2 .

4. A method of cultivating or recultivating contaminated soil or soil with a low humus content, characterized in that a mineral vegetation substrate consisting of
45 to 65 wt% geogenous sand and/or sandy topsoil with a grain size d₅₀ of 0.20-0.35 mm,
4 to 8 wt% coarse-grained crushed clay tile with a grain size d₅₀ of 25-35 mm,
8 to 18 wt% fine-grained crushed clay tile with a grain size d₅₀ of 0.7-1.5 mm,
4 to 8 wt% coarse-grained crushed concrete with a grain size d₅₀ of 15 to 25 mm,
8 to 18 wt% fine-grained crushed concrete with a grain size d₅₀ of 1.5-3.5 mm,
8 to 13 wt% binders such as geogenous loam with a grain size d₅₀ of 0.08-0.15 mm or clay
in a homogeneous mixture is applied in a layer 20 to 100 cm thick to the existing soil and the planting is done on this substrate.

5. A method according to Claim 4, characterized in that the layer thickness and the composition of the substrate selected as a function of the average rainfall, the type of plants used, selected from the group consisting of grass, trees and shrubs, and as a function of the type of existing soil.

6. A use of the mineral vegetation substrate according to Claim 1 for planting on contaminated soil or soil with a low humus content.

7. A use according to Claim 6 for recultivation of forest fire areas and strip-mined landfill areas.

8. A use according to Claim 6 or 7, characterized in that it is applied as a layer with a thickness of 20 to 100 cm on the existing soil.

9. A use according to Claim 8, characterized in that it is applied as a layer with a thickness of 40 to 80 cm on the existing soil.

## Revendications

1. Substrat minéral de végétation comprenant du sable et des débris de béton et de tuiles, caractérisé par les composants suivants:
45 à 65 % en poids de sable géogène et/ou de terre végétale sablonneuse d'une granularité d₅₀ de 0,20 - 0,35 mm,
4 à 8 % en poids de débris de tuiles d'argile en grosses granules, d'une granularité d₅₀ de 25 - 35 mm,
8 à 18 % en poids de débris de tuiles d'argile en fines granules, d'une granularité d₅₀ de 0,7 - 1,5 mm,
4 à 8 % en poids de débris de béton en grosses granules, d'une granularité d₅₀ de 15 à 25 mm,
8 à 18 % en poids de débris de béton en fines granules, d'une granularité d₅₀ de 1,5 - 3,5 mm,
8 à 13 % en poids de matières agglomérantes telles du limon géogène d'une granularité d₅₀ de 0,08 - 0,15 mm ou de l'argile
en mélange homogène.

2. Substrat selon la revendication 1, caractérisé par les composants suivants:
50 à 65 % en poids de sable géogène et/ou de terre végétale sablonneuse d'une granularité d₅₀ de 0,25 - 0,30 mm,
5 à 7 % en poids de débris de tuiles d'argile en grosses granules, d'une granularité d₅₀ de 25 - 30 mm,
10 à 18 % en poids de débris de tuiles d'argile en fines granules, d'une granularité d₅₀ de 0,9 - 1,1 mm,
4 à 6 % en poids de débris de béton en grosses granules, d'une granularité d₅₀ de 15 à 25 mm,
8 à 16 % en poids de débris de béton en fines granules, d'une granularité d₅₀ de 1,5 - 3,0 mm,
8 à 13 % en poids de matières agglomérantes telles du limon géogène d'une granularité d₅₀ de 0,08 - 0,15 mm en mélange homogène.

3. Substrat selon la revendication 1 ou 2, caractérisé par le fait qu'il présente une capacité utile du sol pour l'eau > 16 mm/dm pour une tension d'eau pF comprise entre 1,8 et 4,2.

4. Procédé de culture ou de restauration de sols pauvres en humus ou contaminés, caractérisé par le fait qu'un substrat minéral de végétation comprenant
45 à 65 % en poids de sable géogène et/ou de terre végétale sablonneuse d'une granularité d₅₀ de 0,20 - 0,35 mm,
4 à 8 % en poids de débris de tuiles d'argile en grosses granules, d'une granularité d₅₀ de 25 - 35 mm,
8 à 18 % en poids de débris de tuiles d'argile en fines granules, d'une granularité d₅₀ de 0,7 - 1,5 mm,
4 à 8 % en poids de débris de béton en grosses granules, d'une granularité d₅₀ de 15 à 25 mm,
8 à 18 % en poids de débris de béton en fines granules, d'une granularité d₅₀ de 1,5 - 3,5 mm,
8 à 13 % en poids de matières agglomérantes telles du limon géogène d'une granularité d₅₀ de 0,08 - 0,15 mm ou de l'argile
est déversé en mélange homogène et avec une épaisseur de couche de 20 à 100 cm sur le sol présent, et que la culture se déroule sur ce substrat.

5. Procédé selon la revendication 4, caractérisé en ce que l'épaisseur de la couche et la composition du substrat sont sélectionnées en fonction de la moyenne de précipitations, de la nature des plantes à utiliser, choisies dans le groupe comprenant le gazon, les arbres et les buissons, et en fonction de la nature du sol présent.

6. Application du substrat minéral de végétation selon la revendication 1 pour la mise en culture de sols pauvres en humus ou contaminés.

7. Application selon la revendication 6, pour la restauration de surfaces détruites par des incendies de forêts, d'ouvrages à ciel ouvert et/ou d'aires de verse à ciel ouvert.

8. Application selon la revendication 6 ou 7, caractérisée par le fait qu'on l'épand en une couche d'une épaisseur de 20 à 100 cm sur le sol présent.

9. Application selon la revendication 8, caractérisée par le fait qu'on l'épand en une couche d'une épaisseur de 40 à 80 cm sur le sol présent.
